# EUROPEAN PATENT SPECIFICATION

(11) **EP 4 523 650 B1**
(45) Date of publication and mention of the grant of the patent: **04.11.2026**
(21) Application number: 24200148.5
(22) Date of filing: 13.09.2024
(51) Int. Cl.: A61C 7/10

(54) **ORTHODONTIC KIT**
ORTHODONTISCHES KIT
KIT ORTHODONTIQUE

(30) Priority: 14.09.2023 IT 202300018918
(43) Date of publication of application: 19.03.2025
(73) Proprietor: H.D.C. S.r.l., 36016 Thiene (VI) (IT)
(72) Inventor: BORTOLO MAINO, Giuliano, 36016 Thiene (VI) (IT); BENVEGNU', Marco, 36016 Thiene (VI) (IT); MAINO, Giovanna, 36016 Thiene (VI) (IT); PIZZOLOTTO, David, 36016 Thiene (VI) (IT); SICILIANI, Giuseppe, 36016 Thiene (VI) (IT); LOMBARDO, Luca, 36016 Thiene (VI) (IT); BRUCCULERI, Luca, 36016 Thiene (VI) (IT); PEPE, Filippo, 36016 Thiene (VI) (IT)
(74) Representative: De Filippis, Sara

(56) References cited:
- KR-A- 20170 097 875
- KR-B1- 102 076 634
- KR-B1- 102 088 353

## Description

The present invention relates to a medical kit, in particular a medical kit for dentistry, in particular a medical kit suitable for being inserted into a patient's mouth, for example to widen the palatal arch of a patient, or to distalize and/or mesialize the teeth, or in any case to move the upper arch.

In orthodontics, there are devices that allow the movement of the upper arch of a patient's oral cavity. These well-known devices are usually associated with the palate bones by means of a plurality of mini-screws on which the device itself is mounted.

However, this solution has some drawbacks related to the need to find the correct position in which to insert the mini-screws so that they can generate a stable association with the bone in which they are inserted. To this end, it is possible to calculate the required position and inclination using specific software configured to interpret diagnostic images obtained with different imaging methods . However, it is rather complicated, even for an expert surgeon, to position the screws in the necessary position, and insert them into the patient's palate.

It is known in orthodontics that it is possible to resolve these problems by using a so-called surgical template to position the fixing screws of a oral and/or dental implant.

In particular, the currently known templates are generally made of polymeric material, for example resin, and have a plurality of through holes positioned in such a way as to guide the insertion of the screws that will support the system that will be subsequently installed.

However, this solution is not entirely satisfactory as the templates are expensive to produce and require a dedicated design and assembly phase, increasing the costs and duration of the installation work of the device.

KR 2017 0097875 A discloses an orthodontic kit, especially for the movement of the upper arch of a patient's mouth, including:- an apparatus comprising:- a device configured to move a patient's palate,- at least one connecting element, and preferably two or four connecting elements having a substantially tubular shape with a first through hole, and being configured to connect said device with at least one fixing element, the connecting element having a first threaded portion, and a second non-threaded portion;- said fixing element configured to be stably associated with a bone in the patient's oral cavity, said fixing element having a smaller diameter than said through hole;- a reduction element having a second through hole with a smaller diameter than said first through hole said reduction element being configured to be inserted inside said first through hole defined in said at least one connecting element to guide the passage of said fixing element and/ or of an insertion element configured to insert said fixing element inside said second through hole, the external surface of said reduction element comprising a threaded portion configured to be screwed onto the first threaded portion of said connecting element.

KR 102 076 634 and KR 102 088 353 show two conventional devices in which the screw is passed through a defined through-hole on the device and guided by a guide element. In both of these systems, however, the seal is provided by the head of the screw, which has a larger diameter than the narrowest point of the through-hole into which it is inserted.

As mentioned, these solutions are not fully satisfactory because in order to remove the device it is also necessary to remove the screws, consequently leaving the holes open in the user's palate and preventing the repositioning of further screws in the same positions in the future.

The purpose of the present invention is to propose a medical apparatus and a kit that allows to overcome the drawbacks of the known solutions.

Another aim of the invention is to propose a kit that is simple and economical to produce.

Another aim of the invention is to propose a kit that can be installed even by personnel without specific preparation and/or training.

Another aim of the invention is to propose a kit that is easily realizable and at low costs.

Another aim of the invention is to propose a kit that can be created using manufacturing processes that exploit digital technologies.

Another aim of the invention is to propose a kit that can be made using traditional manufacturing processes, and that does not require complex manufacturing.

Another aim of the invention is to propose a kit that, once installed, is stable for a long time.

Another aim of the invention is to propose a kit that allows the reuse of the mini-screws used to assemble the device.

Another purpose of the invention is to propose a kit that allows the device to be removed without removing the screws used to fix it.

Another aim of the invention is to propose a kit that is an alternative and/or improvement on traditional solutions.

The invention is defined by an orthodontic kit with the features of claim 1. Preferred embodiments of the invention are defined in the dependent claims.

All these purposes, and others that will clearly result from the description, are achieved by means of a medical kit having the characteristics described in claim 1. Other structural and functional features of the present invention and the related advantages with respect to the known art will become even clearer and more evident from an examination of the following description, referring to an exemplary and preferred, but not limiting, embodiment of the medical kit which is the object of the present invention, and from the attached drawings, where:

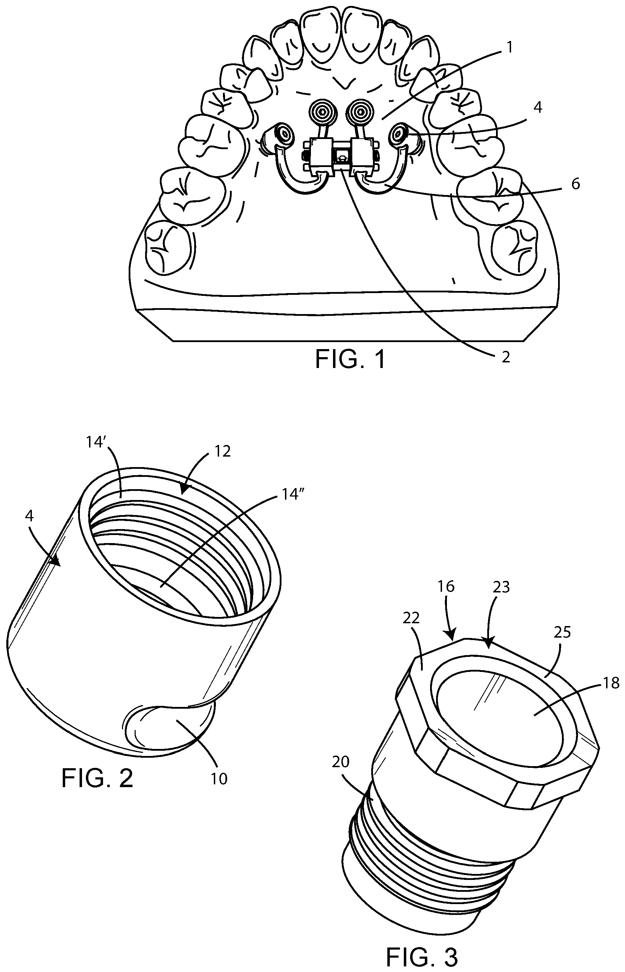

Figure 1 shows an apparatus according to the invention,
Figure 2 shows a front perspective view of a connecting element of the apparatus according to the invention,
Figure 3 shows a lateral perspective view of a reduction element of the medical apparatus according to the invention,

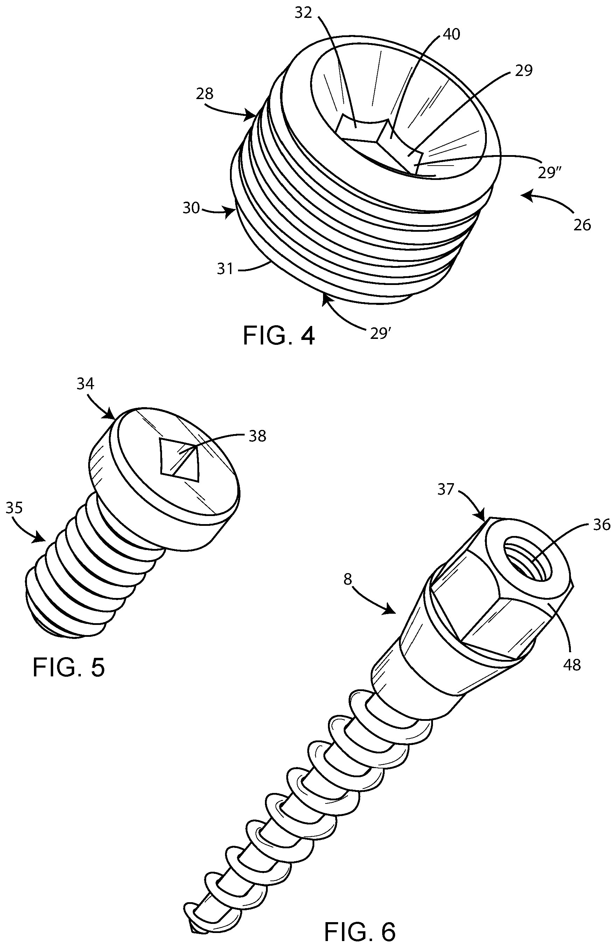

Figure 4 shows a front perspective view of a locking element part of the medical kit according to the invention,
Figure 5 shows a front perspective view of a sealing element part of the medical kit according to the invention,
Figure 6 shows a front perspective view of a fixing element part of the medical kit according to the invention,

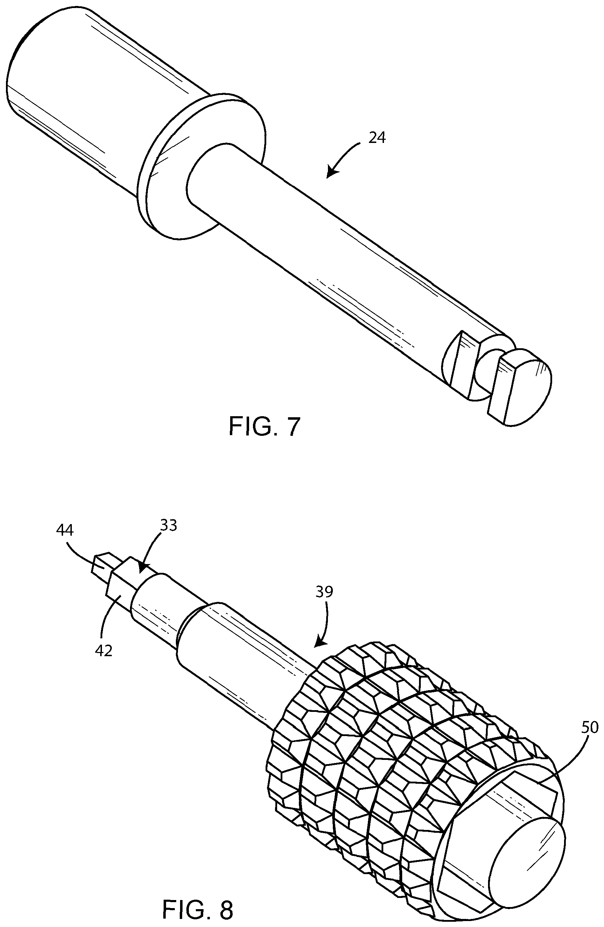

Figure 7 shows a front perspective view of an insertion element which is part of the medical kit according to the invention,
Figure 8 shows a perspective view of the manipulation device part of the kit according to the invention
Figure 9 shows a perspective view of an apparatus according to the invention in a further embodiment and
Figure 10 shows a perspective view of an apparatus according to the invention in a further embodiment.

As can be clearly seen from the figures, the present invention relates to a medical apparatus, generally indicated by the number 1, which is configured to be associated with the bone of a patient, preferably inside the palate, or alternatively it can be associated with a dental crown.

In particular, the apparatus 1 comprises at least one device 2 configured for example to widen the palatal arch or to distalize and mesialize the teeth, or in any case to move the upper arch. Suitably, for this purpose and in a traditional manner, the device may for example comprise a pair of portions connected by a movement mechanism configured to move the two portions away from each other. Advantageously, the device 2 may be made of metal material. Preferably, the device 2 may not be a surgical template, i.e. it may not be configured to be used as a guide for fixing mini-screws and to then be removed and/or discarded.

The device 2 connectable to a suitable connecting element 4 configured to allow the connection of the device 2 with the palatal arch, as will be clear later. In particular, the device 2 may comprise and/or be connected with two, or with four connecting elements 4. Hereinafter, reference will be made to the version with two connecting elements, but it is understood that what follows may also be referred, mutatis mutandis, to the other embodiments.

In particular, the connecting element can be connected to the rest of the device 2 by means of arms 6, for example metal, of fixed and determined shape and length, and preferably rigid. Advantageously, the shape and size of said arms 6 can be selected on the basis of one or more tomographies of the patient's mouth. In any case, the arms 6 can have a shape and/or size such as to ensure that the connecting elements 4 are positioned in correspondence with the points in which the fixing elements 8 must be inserted, which associate the device 2 to the body, and in particular to the palatal arch of the patient. Suitably, said fixing elements 8 can comprise mini-orthodontic screws.

Furthermore, the apparatus 1 may comprise at least one, and preferably at least two, additional arms (not shown), configured to stably associate the apparatus itself with at least one dental element of the patient's oral cavity. For example, said arms may each comprise a corresponding slot configured to allow the association of the arm itself with a tooth.

Advantageously, particularly in the embodiment in which the connecting elements 4 are connected to the device 2, each connecting element 4 can have a seat 10 configured to allow a stable connection of the connecting element 4 with the arm 6. In particular, for example, the seat 10 can be shaped in order to house, at least partially, said arm 6, so as to increase the contact surface between the two and/or advantageously redirect any forces acting between the two, and make the coupling more stable.

The connecting element has a substantially tubular shape, with a first through hole 12. The first through hole 12 has a diameter substantially larger than that of the fixing elements 8 to be used. In particular, therefore, said fixing elements 8 may be configured to pass through the first through hole 12 substantially without impediment.

The connecting element 4 has a first threaded portion 14', and a second non-threaded portion 14". Advantageously, when the apparatus is associated with the patient's body, the first portion 14' may be the one furthest from the point of association and/or the one facing the centre of the patient's oral cavity, or in any case the one furthest from the patient's palatal arch.

The kit according to the invention also comprises a reduction element 16 configured to be associated in a stable and reversible manner with the connecting element 4 in order to allow the guided insertion of the element 24 and thus act as a guide. The reduction element 16 is configured to reduce the diameter of the first through hole 12 in order to allow the passage of the insertion element 24 with a reduced margin and/or play. For example, the reduction element 16 may be a bushing.

Advantageously, at a first end 23 of said reduction element 16 there may be a suitable shaped portion 25 configured to be engaged, preferably by means of a shape coupling, by said manipulation device 39, so as to be integral with the latter in rotation in order to allow the insertion of the reduction element 16 itself inside the connecting element 4. Suitably, said shape coupling may provide that said shaped portion 25 has a hexagonal section, and is configured to be engaged by a corresponding hexagonal counter-portion 50 defined in said manipulation device 39.

In a preferred embodiment, when the apparatus 1 is in the assembled configuration - i.e. when it is fixed to the palatal arch and/or in any case to the patient's body - the reduction element may not be associated with the apparatus itself. In particular, however, the reduction element may be necessary in order to position and/or associate the apparatus 1 to the palatal arch and/or in any case to the patient's body.

The reduction element 16 has a substantially tubular shape, and, in particular, can have an external diameter substantially corresponding to that of the first through hole 12. Advantageously, the reduction element has a second through hole 18, which has an internal diameter substantially corresponding to that of said fixing element 8 and/or to that of said insertion element 24.

Suitably, in order to ensure a stable and reversible association between said connecting element 4 and said reduction element 16, suitable retention means may be used, which may for example comprise a bayonet connection, a conical interlocking connection or other.

The association between said connecting element 4 and said reduction element 16 occurs by screwing.

The external surface of said reduction element 16 comprises a threaded portion 20 configured to be screwed onto said first threaded portion 14' of said connecting element 4.

Suitably, the through hole 12 of the connecting element 4 is sized so as to contain, at least partially, said reduction element 16.

Advantageously, the reduction element 16 can be configured to present a surface intended to abut a corresponding surface of said insertion element 24 in order to define the depth to which said fixing element 8 must reach, as will be clear later.

Advantageously, the reduction element 16 may comprise an engagement portion 22 configured to be engaged by a suitable instrument, for example a dental screwdriver, or in any case with an instrument commonly present in a dental office.

Furthermore, said kit comprises an insertion element 24 configured to couple in a stable and reversible manner with said fixing element 8. In one embodiment, said insertion element may substantially correspond to the insertion device described in patent application IT102023000018876.

Advantageously furthermore said insertion element 24 can preferably be configured to be constrained in rotation around and/or in translation along a longitudinal axis defined by said fixing element 8 and/or said insertion element 24 with respect to said fixing element 8 when the two are coupled.

Suitably, said insertion element 24 may comprise a substantially traditional driver. In one embodiment, said fixing element may substantially correspond to the fastening device described in Italian patent application IT102023000018876 which is referred to herein.

The kit further comprises at least one locking element 26, configured to mutually lock said connecting element 4 and said fixing element 8, in particular in cooperation with a sealing element 34, as will be clear below. Advantageously, said locking element 26 is configured to couple with said connecting element 4, in a manner analogous to said reduction element 16. For this purpose, the locking element 26 has a corresponding threaded portion 28 configured to couple with said first threaded portion 14' of said connecting element 4.

In a preferred embodiment, the locking element 26 may comprise a first substantially conical base 30, in order to ensure its centering with respect to said connecting element 4.

Furthermore, said locking element 26 may comprise suitable means that allow it to be coupled with a corresponding dental instrument, for example a dental screwdriver. In particular, said means may comprise a shaped opening 32, alternatively they could comprise a suitable shaped protuberance.

Advantageously, the second base 31 of the locking element 26, which is substantially opposite to the first 30, is configured to be engaged by the dental instrument, and preferably can be hollow, and more preferably can have a substantially conical concavity.

Advantageously, the locking element may comprise a third hole 29, preferably through, comprising a first portion 29' configured to house, at least partially, a first end 37 of the insertion element 8 and a second portion 29" configured to couple with a corresponding dental instrument, for example said manipulation device 39 suitable for rotating said locking element 26.

Advantageously, said first portion 29' can be configured to adopt a first coupling of shape 38 with the manipulation device 39. For example, said first portion can present a hexagonal cavity 40, which couples with a first profiled protrusion 42, for example with a hexagonal section present on said manipulation device 39.

Furthermore, said locking element 28 comprises means for its association with a suitable sealing element 34, which is configured to ensure the stability of the positioning of the fixing element 8. In particular, said association may occur by means of a conical coupling.

Furthermore, the sealing element 34 is configured to be directly associated with said fixing element 8, preferably with known means of association. Suitably, said sealing element 34 comprises a threaded portion 35. The fixing element 8 comprises a threaded hollow portion 36, which is located at a first end 37 that is opposite to that configured to be inserted inside the patient's bone, said threaded hollow portion 36 being configured to house, at least partially, said sealing element 34.

Alternatively, said sealing element 34 can be configured to be associated with said fixing element 8 by means of a conical or bayonet interlocking, or with any other known means of association.

Furthermore, said sealing element 34 may comprise an engagement portion 38 configured to be engaged by said manipulation device 39 in order to rotate said sealing element 34, or in any case to activate the association means that secure it to the insertion element 8. In particular, the engagement portion 38 may be configured to engage in shape with a second profiled protrusion 44 defined on said manipulation device 39. For example, said second profiled protrusion 44 may have a square section, corresponding to a cavity 46 present in said engagement portion 38. Advantageously, said second profiled portion 44 may protrude in a longitudinal direction with respect to said first profiled portion 42, and may suitably have a smaller section.

Advantageously, therefore, said manipulation device 39 can comprise different shaped portions so as to be able to engage in rotation said locking element 26, said sealing element 34 and said reduction element 16.

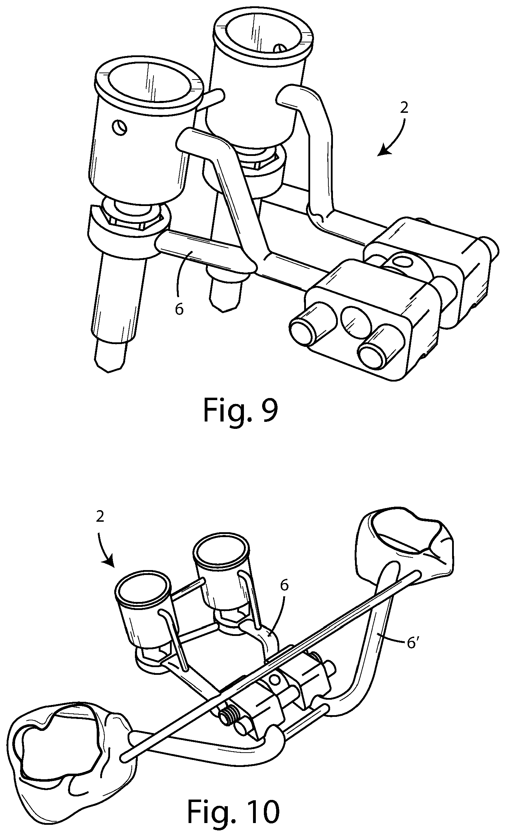

In an embodiment shown in fig. 9 and 10, said reduction element 16 can be an integral part of the apparatus 1, i.e. it can be associated in a non-removable manner to the connecting element 4, for example the two can be co-molded in 3D or with a sintering or milling technique .

In particular, also in this embodiment, the reduction element 16 can be removed from the patient's mouth once the fixing element 8 has been coupled to the bone and/or in any case to the patient's palatal arch.

The operation of the apparatus and the kit according to the invention are clearly evident from what has been said above.

Advantageously, the device 2 can be made, for example by additive manufacturing processes, or even by traditional manufacturing methods, to measure for the patient. For this purpose, a digital image, preferably three-dimensional, of the patient's palatal arch can be created, for example by tomography or x-ray, also made on casts. Subsequently, the screws can be positioned on said three-dimensional image by means of a specific software, so as to select the position and direction of insertion of the screws themselves and, consequently, the position and orientation of the coupling elements 4 and, possibly, of the arms 6.

Subsequently, the device 2 can be produced, for example by means of suitable additive manufacturing methods, or by means of traditional manufacturing methods, and can be associated with a cast of the patient's dental arch by means of analogues of the fixing element 8 and the reduction element 16.

First, the apparatus 1, which has been tailor-made for the specific patient, can be positioned and associated with the patient's body, for example, it can be associated with a plurality of teeth by means of the additional arms. In this way, the apparatus is in the required position, and in a stable configuration. In particular, the connecting elements 4 are located at the points where the fixing elements 8 must be inserted. Subsequently, the reduction elements 16 are each associated with a connecting element 4. For example, each reduction element 16 can be rotated by means of a common surgical screwdriver in order to screw it into the connecting element 4. It is clear that, in the embodiment in which the reduction elements 16 are part of the apparatus 1, this step will not be necessary.

Subsequently, the insertion element 8 can be inserted into the desired position. In particular, the presence of the reduction element 16 allows the insertion element to be inserted with high precision, so that the position in which it is inserted can then be its definitive position - i.e. the one it will have to maintain at least for the entire duration of the therapy performed with the apparatus 1 according to the invention. Conveniently, for this purpose, the insertion element 8 can be operated by means of a corresponding dental handpiece to which an insertion element 24 can be associated, in order to be inserted into the patient's bone after having passed through the second through hole 18.

Conveniently when the insertion element 8 has been inserted to the desired depth and has been disengaged from the insertion element 24 the reduction element 16 can be removed from the connecting element 4. **It is** clear that, in the embodiment in which the reduction element is part of the apparatus 1 fig 9 or 10, this step will not be necessary. **In** particular, however, it will be possible to remove it from the patient's mouth by separating it from the apparatus 1 by means of a cut.

Subsequently, in order to mutually constrain the insertion element 8 and the connecting element 4, and consequently the apparatus 1, the locking element 26 is associated with the connecting element 4, for example by screwing. Advantageously therefore, the first base of the locking element 26 can abut against said first end 37 of said insertion element 8. Finally, advantageously, the sealing element 34 can be inserted into said shaped opening 32 and can engage the threaded hollow portion 36 of the insertion element 8. Advantageously in this way, the sealing element 34 can exert pressure on the second conical base of the locking element 26, thus obtaining a centring force on the sealing element 34. Furthermore, in this way it pushes down the locking element 34 which then mutually blocks the apparatus 1 (to which it is connected via the connecting element 4), and the insertion element 8.

If it is necessary to subsequently remove the device 1, it is sufficient to repeat the process in reverse, but it is clear that, in this case, the insertion element 8 is not irreversibly bound to the device 1, and therefore can be left in position to be reused at a later time.

From what has been said it is clear that the present invention is advantageous, indeed, optimal, as it allows an orthodontic appliance to be fitted without resorting to a guide template, simplifying and accelerating the fitting procedures.

## Claims

1. Orthodontic kit, especially for the movement of the upper arch of a patient's mouth, including:
- an apparatus (1) comprising:
- a device (2) configured to move a patient's palate,
- at least one connecting element (4), and preferably two or four connecting elements, having a substantially tubular shape with a first through hole (12), and being configured to connect said device (2 ) with at least one fixing element (8), the connecting element (4) having a first threaded portion (14'), and a second non-threaded portion (14");
- said fixing element (8) configured to be stably associated with a bone in the patient's oral cavity, said fixing element (8) having a smaller diameter than said through hole (12);
- a reduction element (16) having a second through hole (18) with a smaller diameter than said first through hole (12) said reduction element (16) being configured to be inserted inside said first through hole (12) defined in said at least one connecting element (4) to guide the passage of said fixing element (8) and/or of an insertion element (24) configured to insert said fixing element (8) inside said second through hole (18), the external surface of said reduction element (16) comprising a threaded portion (20) configured to be screwed onto the first threaded portion (14') of said connecting element (4);
- **characterised in that**, the orthodontic kit further comprises one locking element (26) configured to stably and reversibly associate said connecting element (4) with said fixing element (8), the locking element (26) having a corresponding threaded portion (28) configured to couple with said first threaded portion (14') of said connecting element (4) and
- a sealing element (34) configured to be associated in a stable and reversible manner with said at least one fixing element (8), and to abut on said locking element (26);
wherein the sealing element (34) may comprise a threaded portion (35) and the fixing element (8) comprises a threaded hollow portion (36), which is located at a first end (37) that is opposite to that configured to be inserted inside the patient's bone, said threaded hollow portion (36) being configured to house, at least partially, said sealing element (34).

2. Kit according to one or more of the preceding claims **characterised in that** it further comprises a manipulation device configured to engage said sealing element (34), said locking element (26) and said reduction element (16).

3. Kit according to one or more of the preceding claims **characterised in that** said connecting element (4) has a seat (10) configured to house, at least partially, an arm (6) of said device (2).

4. Kit according to one or more of the preceding claims **characterised in that** said device also comprises additional arms configured to allow the stable association of the device itself with at least one tooth of the patient.

5. Kit according to one or more of the preceding claims **characterised in that** said connecting element (4) comprises a threaded portion (14') configured to couple with both said locking element (26) and said reduction element (16).

6. Kit according to one or more of the preceding claims **characterised in that** said locking element (26) has a third through hole (29) configured to house, at least partially, one end of said fixing element (8).

7. Kit according to one or more of the preceding claims **characterised in that** said at least one reduction element (16) is irreversibly associated with said device (2).

8. Kit according to one or more of the preceding claims **characterised in that** said at least one reduction element (16), said locking element (26) and said sealing element (34) can all be manipulated by means of the same manipulation element (39).

9. Kit according to one or more of the preceding claims **characterised in that** said locking element (26) has an external diameter larger than said fixing element (8), and substantially corresponding to the internal diameter of said connecting element (4).

10. Kit according to one or more of the preceding claims **characterised in that** said reduction element (16) has an internal diameter smaller than the internal diameter of said connecting element (4), and substantially corresponding to the external diameter of said locking element (26).

11. Kit according to one or more of the preceding claims **characterised by** the fact that, when the kit is in assembled configuration - i.e. when it is fixed to the palatal arch and/or in any case to the patient's body - the reduction element (16) is not associated with the apparatus itself.

12. Kit according to one or more of the preceding claims **characterised in that** said reduction element (16) has a surface intended to abut a corresponding surface of said insertion element (24) in order to define the depth to which said fixing element (8) must reach.

13. Kit according to one or more of the preceding claims **characterised in that** said sealing element (34) has a substantially smaller external diameter than said first through hole (12).

## Patentansprüche

1. Orthodontisches Kit, insbesondere zur Bewegung des Oberkieferbogens im Mund eines Patienten, umfassend:
- eine Vorrichtung (1), umfassend:
- eine Einrichtung (2), die dazu ausgebildet ist, den Gaumen eines Patienten zu bewegen,
- mindestens ein Verbindungselement (4), und vorzugsweise zwei oder vier Verbindungselemente,
das eine im Wesentlichen rohrförmige Form mit einer ersten Durchgangsbohrung (12) aufweist und dazu ausgebildet ist, die Einrichtung (2) mit mindestens einem Befestigungselement (8) zu verbinden,
wobei das Verbindungselement (4) einen ersten Gewindeabschnitt (14') und einen zweiten gewindelosen Abschnitt (14") aufweist;
- das Befestigungselement (8), das dazu ausgebildet ist, stabil mit einem Knochen in der Mundhöhle des Patienten verbunden zu werden, wobei das Befestigungselement (8) einen kleineren Durchmesser als die Durchgangsbohrung (12) aufweist;
- ein Reduzierelement (16) mit einer zweiten Durchgangsbohrung (18), die einen kleineren Durchmesser als die erste Durchgangsbohrung (12) aufweist, wobei das Reduzierelement (16) dazu ausgebildet ist, in die in dem mindestens einen Verbindungselement (4) ausgebildete erste Durchgangsbohrung (12) eingesetzt zu werden, um den Durchgang des Befestigungselements (8) und/oder eines Einsetzelements (24), das dazu ausgebildet ist, das Befestigungselement (8) in die zweite Durchgangsbohrung (18) einzusetzen, zu führen, wobei die Außenfläche des Reduzierelements (16) einen Gewindeabschnitt (20) umfasst, der dazu ausgebildet ist, auf den ersten Gewindeabschnitt (14') des Verbindungselements (4) aufgeschraubt zu werden;
- **dadurch gekennzeichnet, dass** das orthodontische Kit ferner umfasst
ein Verriegelungselement (26), das dazu ausgebildet ist, das Verbindungselement (4) stabil und reversibel mit dem Befestigungselement (8) zu verbinden, wobei das Verriegelungselement (26) einen entsprechenden Gewindeabschnitt (28) aufweist, der dazu ausgebildet ist, mit dem ersten Gewindeabschnitt (14') des Verbindungselements (4) in Eingriff zu kommen, und
- ein Verschlusselement (34), das dazu ausgebildet ist, stabil und reversibel mit dem mindestens einen Befestigungselement (8) verbunden zu werden und an dem Verriegelungselement (26) anzuliegen;
wobei das Verschlusselement (34) einen Gewindeabschnitt (35) umfassen kann und das Befestigungselement (8) einen hohlen Gewindeabschnitt (36) umfasst, der sich an einem ersten Ende (37) befindet, das demjenigen Ende gegenüberliegt, das dazu ausgebildet ist, in den Knochen des Patienten eingesetzt zu werden, wobei der hohle Gewindeabschnitt (36) dazu ausgebildet ist, das Verschlusselement (34) zumindest teilweise aufzunehmen.

2. Kit nach einem oder mehreren der vorhergehenden Ansprüche, **dadurch gekennzeichnet, dass** es ferner eine Betätigungsvorrichtung umfasst, die dazu ausgebildet ist, mit dem Verschlusselement (34), dem Verriegelungselement (26) und dem Reduzierelement (16) in Eingriff zu kommen.

3. Kit nach einem oder mehreren der vorhergehenden Ansprüche, **dadurch gekennzeichnet, dass** das Verbindungselement (4) eine Aufnahme (10) aufweist, die dazu ausgebildet ist, einen Arm (6) der Einrichtung (2) zumindest teilweise aufzunehmen.

4. Kit nach einem oder mehreren der vorhergehenden Ansprüche, **dadurch gekennzeichnet, dass** die Einrichtung ferner zusätzliche Arme umfasst, die dazu ausgebildet sind, eine stabile Verbindung der Einrichtung selbst mit mindestens einem Zahn des Patienten zu ermöglichen.

5. Kit nach einem oder mehreren der vorhergehenden Ansprüche, **dadurch gekennzeichnet, dass** das Verbindungselement (4) einen Gewindeabschnitt (14') umfasst, der dazu ausgebildet ist, sowohl mit dem Verriegelungselement (26) als auch mit dem Reduzierelement (16) in Eingriff zu kommen.

6. Kit nach einem oder mehreren der vorhergehenden Ansprüche, **dadurch gekennzeichnet, dass** das Verriegelungselement (26) eine dritte Durchgangsbohrung (29) aufweist, die dazu ausgebildet ist, ein Ende des Befestigungselements (8) zumindest teilweise aufzunehmen.

7. Kit nach einem oder mehreren der vorhergehenden Ansprüche, **dadurch gekennzeichnet, dass** das mindestens eine Reduzierelement (16) irreversibel mit der Einrichtung (2) verbunden ist.

8. Kit nach einem oder mehreren der vorhergehenden Ansprüche, **dadurch gekennzeichnet, dass** das mindestens eine Reduzierelement (16), das Verriegelungselement (26) und das Verschlusselement (34) alle mittels desselben Betätigungselements (39) betätigt werden können.

9. Kit nach einem oder mehreren der vorhergehenden Ansprüche, **dadurch gekennzeichnet, dass** das Verriegelungselement (26) einen Außendurchmesser aufweist, der größer als derjenige des Befestigungselements (8) ist und im Wesentlichen dem Innendurchmesser des Verbindungselements (4) entspricht.

10. Kit nach einem oder mehreren der vorhergehenden Ansprüche, **dadurch gekennzeichnet, dass** das Reduzierelement (16) einen Innendurchmesser aufweist, der kleiner als der Innendurchmesser des Verbindungselements (4) ist und im Wesentlichen dem Außendurchmesser des Verriegelungselements (26) entspricht.

11. Kit nach einem oder mehreren der vorhergehenden Ansprüche, **dadurch gekennzeichnet, dass**, wenn sich das Kit in einer zusammengebauten Konfiguration befindet - d.h. wenn es am Gaumenbogen und/oder jedenfalls am Körper des Patienten befestigt ist -, das Reduzierelement (16) nicht mit der Vorrichtung selbst verbunden ist.

12. Kit nach einem oder mehreren der vorhergehenden Ansprüche, **dadurch gekennzeichnet, dass** das Reduzierelement (16) eine Fläche aufweist, die dazu bestimmt ist, an einer entsprechenden Fläche des Einsetzelements (24) anzuliegen, um die Tiefe festzulegen, bis zu der das Befestigungselement (8) reichen muss.

13. Kit nach einem oder mehreren der vorhergehenden Ansprüche, **dadurch gekennzeichnet, dass** das Verschlusselement (34) einen Außendurchmesser aufweist, der wesentlich kleiner als die erste Durchgangsbohrung (12) ist.

## Revendications

1. Kit orthodontique, notamment pour le déplacement de l'arcade supérieure de la bouche d'un patient, comprenant :
- un appareil (1) comprenant :
- un dispositif (2) configuré pour déplacer le palais d'un patient,
- au moins un élément de liaison (4), et de préférence deux ou quatre éléments de liaison, ayant une forme sensiblement tubulaire avec un premier trou traversant (12), et étant configuré pour lier ledit dispositif (2) à au moins un élément de fixation (8),
l'élément de liaison (4) ayant une première portion filetée (14') et une seconde portion non filetée (14") ;
- ledit élément de fixation (8) configuré pour être associé de manière stable à un os dans la cavité buccale du patient, ledit élément de fixation (8) ayant un diamètre inférieur à celui dudit trou traversant (12) ;
- un élément de réduction (16) ayant un deuxième trou traversant (18) d'un diamètre inférieur à celui dudit premier trou traversant (12), ledit élément de réduction (16) étant configuré pour être inséré à l'intérieur dudit premier trou traversant (12) défini dans ledit au moins un élément de liaison (4), afin de guider le passage dudit élément de fixation (8) et/ou d'un élément d'insertion (24) configuré pour insérer ledit élément de fixation (8) à l'intérieur dudit deuxième trou traversant (18), la surface externe dudit élément de réduction (16) comprenant une portion filetée (20) configurée pour être vissée sur la première portion filetée (14') dudit élément de liaison (4);
**caractérisé en ce que** le kit orthodontique comprend en outre
- un élément de verrouillage (26) configuré pour associer de manière stable et réversible ledit élément de liaison (4) audit élément de fixation (8), l'élément de verrouillage (26) ayant une portion filetée correspondante (28) configurée pour s'accoupler avec ladite première portion filetée (14') dudit élément de liaison (4), et
- un élément d'étanchéité (34) configuré pour être associé de manière stable et réversible audit au moins un élément de fixation (8), et pour venir en butée contre ledit élément de verrouillage (26) ; dans lequel l'élément d'étanchéité (34) peut comprendre une portion filetée (35) et l'élément de fixation (8) comprend une portion creuse filetée (36), qui est située au niveau d'une première extrémité (37) opposée à celle configurée pour être insérée à l'intérieur de l'os du patient, ladite portion creuse filetée (36) étant configurée pour loger, au moins partiellement, ledit élément d'étanchéité (34).

2. Kit selon l'une ou plusieurs des revendications précédentes, **caractérisé en ce qu'**il comprend en outre un dispositif de manipulation configuré pour venir en prise avec ledit élément d'étanchéité (34), ledit élément de verrouillage (26) et ledit élément de réduction (16).

3. Kit selon l'une ou plusieurs des revendications précédentes, **caractérisé en ce que** ledit élément de liaison (4) présente un logement (10) configuré pour loger, au moins partiellement, un bras (6) dudit dispositif (2).

4. Kit selon l'une ou plusieurs des revendications précédentes, **caractérisé en ce que** ledit dispositif comprend également des bras supplémentaires configurés pour permettre l'association stable du dispositif luimême avec au moins une dent du patient.

5. Kit selon l'une ou plusieurs des revendications précédentes, **caractérisé en ce que** ledit élément de liaison (4) comprend une portion filetée (14') configurée pour s'accoupler à la fois avec ledit élément de verrouillage (26) et avec ledit élément de réduction (16).

6. Kit selon l'une ou plusieurs des revendications précédentes, **caractérisé en ce que** ledit élément de verrouillage (26) présente un troisième trou traversant (29) configuré pour loger, au moins partiellement, une extrémité dudit élément de fixation (8).

7. Kit selon l'une ou plusieurs des revendications précédentes, **caractérisé en ce que** ledit au moins un élément de réduction (16) est associé de manière irréversible audit dispositif (2).

8. Kit selon l'une ou plusieurs des revendications précédentes, **caractérisé en ce que** ledit au moins un élément de réduction (16), ledit élément de verrouillage (26) et ledit élément d'étanchéité (34) peuvent tous être manipulés au moyen du même élément de manipulation (39).

9. Kit selon l'une ou plusieurs des revendications précédentes, **caractérisé en ce que** ledit élément de verrouillage (26) présente un diamètre externe supérieur à celui dudit élément de fixation (8), et correspondant essentiellement au diamètre interne dudit élément de liaison (4).

10. Kit selon l'une ou plusieurs des revendications précédentes, **caractérisé en ce que** ledit élément de réduction (16) présente un diamètre interne inférieur au diamètre interne dudit élément de liaison (4), et correspondant essentiellement au diamètre externe dudit élément de verrouillage (26).

11. Kit selon l'une ou plusieurs des revendications précédentes, **caractérisé en ce que**, lorsque le kit se trouve dans une configuration assemblée - c'est-à-dire lorsqu'il est fixé à l'arcade palatine et/ou, en tout état de cause, au corps du patient - l'élément de réduction (16) n'est pas associé à l'appareil luimême.

12. Kit selon l'une ou plusieurs des revendications précédentes, **caractérisé en ce que** ledit élément de réduction (16) présente une surface destinée à venir en butée contre une surface correspondante dudit élément d'insertion (24) afin de définir la profondeur que doit atteindre ledit élément de fixation (8).

13. Kit selon l'une ou plusieurs des revendications précédentes, **caractérisé en ce que** ledit élément d'étanchéité (34) présente un diamètre externe sensiblement inférieur à celui dudit premier trou traversant (12).
